# EUROPÄISCHE PATENTSCHRIFT

(11) **EP 3 849 782 B1**
(45) Veröffentlichungstag und Bekanntmachung des Hinweises auf die Patenterteilung: **22.03.2023**
(21) Anmeldenummer: 19801724.6
(22) Anmeldetag: 30.10.2019
(51) Int. Cl.: B29C 64/295, B29C 64/209, B29C 64/268, B29C 64/118, B33Y 30/00

(54) **DRUCKKOPF FÜR EINE DRUCKVORRICHTUNG ZUM DREIDIMENSIONALEN AUFBRINGEN EINES MATERIALS, DRUCKVORRICHTUNG SOWIE VERFAHREN**
PRINT HEAD FOR A PRINTER FOR THREE-DIMENSIONAL APPLICATION OF A MATERIAL, PRINTER AND METHOD
TÊTE D'IMPRESSION POUR UN DISPOSITIF D'IMPRESSION DESTINÉE À L'APPLICATION TRIDIMENSIONNELLE D'UN MATÉRIAU, IMPRESSION AINSI QUE PROCÉDÉ

(30) Priorität: 12.12.2018 EP 18212009
(43) Veröffentlichungstag der Anmeldung: 21.07.2021
(73) Patentinhaber: Siemens Aktiengesellschaft, 80333 München (DE)
(72) Erfinder: JÄHNICKE, Jens, 09112 Chemnitz (DE); KÜHN, Cornelius, 91052 Erlangen (DE)
(74) Vertreter: Siemens Patent Attorneys
(86) Internationale Anmeldenummer: PCT/EP2019/079632
(87) Internationale Veröffentlichungsnummer: WO 2020/120000

(56) Entgegenhaltungen:
- WO-A1-2017/210490
- WO-A2-2015/130401
- US-A1- 2015 314 528

## Beschreibung

### Druckkopf für eine Druckvorrichtung zum dreidimensionalen Aufbringen eines Materials, Druckvorrichtung sowie Verfahren

Die vorliegende Erfindung betrifft einen Druckkopf für eine Druckvorrichtung zum dreidimensionalen Aufbringen eines Materials. Der Druckkopf umfasst eine beheizte Düse zum Schmelzen eines Materials und zum Ausgeben des geschmolzenen Materials. Dabei ist der Druckkopf dazu ausgebildet, bei einer Bewegung des Druckkopfs entlang einer vorbestimmten Verfahrrichtung das geschmolzene Material als Strang auf ein zuvor aufgetragenes Material, welches zumindest teilweise erstarrt ist, und/oder ein Substrat aufzutragen. Darüber hinaus betrifft die vorliegende Erfindung eine Druckvorrichtung zum dreidimensionalen Aufbringen eines Materials mit einem solchen Druckkopf. Schließlich betrifft die vorliegende Erfindung ein Verfahren zum dreidimensionalen Aufbringen eines Materials.

Aus dem Stand der Technik sind zahlreiche additive Fertigungsverfahren oder dreidimensionale Druckverfahren bekannt. Vorliegend richtet sich das Interesse insbesondere auf das sogenannte FLM-Verfahren (FLM - fused layer manufacturing/modeling), welches als Strangextrusionsverfahren dadurch charakterisiert ist, dass aufgeschmolzene Kunststoffbahnen aufeinander abgelegt werden. Hierbei entstehen in dem zu fertigenden Bauteil durch den Fertigungsprozess vor allem in Aufbaurichtung mechanische Anisotropien. Diese kommen dadurch zustande, dass das zuvor aufgetragene Material beziehungsweise die unmittelbar zuvor gedruckte Bahn bereits erkaltet ist, bevor eine neue Bahn darauf aufgeschmolzen wird. Dies äußert sich nicht nur in einem Verzug des Bauteils, sondern vor allem in der schwächeren mechanischen Belastbarkeit in Aufbaurichtung. Durch den hohen Temperaturgradienten verschweißen die Kunststoffbahnen nur unzureichend miteinander, was zur Folge hat, dass die interlaminare Haftung nur suboptimal erfolgen kann. Hier kann teilweise eine Verminderung der mechanischen Eigenschaften um 40 bis 60% in Bezug auf die horizontale Belastungsmöglichkeit entstehen. Wünschenswert wäre eine Grenzfläche beziehungsweise Schweißnaht, in der beide Schichten ohne sichtbaren Unterschied verschmolzen sind.

Aktuell gibt es in der additiven Fertigung kaum Ansätze, die das Problem direkt angehen. Teilweise wird der Verzug und die interlaminare Haftung verbessert, indem der gesamte Bauraum, indem sich sowohl der Druckkopf als auch das bereits aufgetragene Material befindet, beheizt wird. Dadurch, dass der gesamte Bauraum beheizt wird, sind alle mechanischen Teile ebenfalls der direkten Wärme ausgesetzt, was beispielsweise bei Motoren oder anderen elektronischen Bauteilen zu Ausfällen führen kann. Nur durch ein sehr aufwändiges Isolationskonzept können Anbauteile indirekt vor der Wärmekonvektion geschützt werden. Auch die Abbaureaktionen in den Molekülketten der Polymere während des gesamten Aufbauprozesses sind nicht zu unterschätzen. Die Anhaftung und der Verzug werden zwar im Allgemeinen mit diesem Prinzip verbessert, sind aber in ihrer Leistungsfähigkeit begrenzt. Ein tatsächliches "Verschweißen" in der Grenzschicht wird so nicht umsetzbar sein.

Darüber hinaus ist aus der traditionellen Fertigung, das sogenannte Laserdurchstrahlschweißen ein bewährtes Konzept zum Fügen von Kunststoffen. Hierbei werden ein transmittierender und ein absorbierender Kunststoff kombiniert, die zusammen die Fügezone beziehungsweise eine Grenzfläche bilden. Der transparente Kunststoff wird dabei von einem Laserstrahl ohne nennenswerte Erwärmung durchstrahlt. Erst in dem absorbierenden Kunststoff wird der Laserstrahl in einer oberflächennahen Schicht vollständig absorbiert, wobei die Laserenergie in Wärmeenergie umgesetzt wird und der Kunststoff somit aufgeschmolzen wird. Das Dokument US 2015/314528 A1 offenbart einen Druckkopf gemäß dem Oberbegriff des Anspruchs 1.

Es ist Aufgabe der vorliegenden Erfindung, eine Lösung aufzuzeigen, wie bei einem dreidimensionalen Druckverfahren der eingangs genannten Art die mechanischen Eigenschaften des hergestellten Bauteils verbessert werden können.

Diese Aufgabe wird erfindungsgemäß durch einen Druckkopf, durch eine Druckvorrichtung sowie durch ein Verfahren mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßer Druckkopf für eine Druckvorrichtung zum dreidimensionalen Aufbringen eines Materials umfasst eine beheizte Düse zum Schmelzen des Materials und zum Ausgeben des geschmolzenen Materials. Dabei ist der Druckkopf dazu ausgebildet, bei einer Bewegung des Druckkopfs entlang einer vorbestimmten Verfahrrichtung das aufgeschmolzene Material als Strang auf ein zuvor aufgetragenes Material, welches zumindest teilweise erstarrt ist, und/oder ein Substrat aufzutragen. Darüber hinaus umfasst der Druckkopf eine Schmelzeinrichtung, welche dazu ausgebildet ist während der Bewegung des Druckkopfs fortlaufend jeweilige Bereiche des zuvor aufgetragenen Materials lokal zu erwärmen.

Der Druckkopf kann in einer Druckvorrichtung zum dreidimensionalen Aufbringen des Materials verwendet werden. Insbesondere kann mit der Druckvorrichtung das sogenannte FLM-Verfahren durchgeführt werden. Mittels des Verfahrens kann ein Bauteil hergestellt werden. Dabei kann das Material zunächst in festem Zustand der Düse zugeführt werden. Bei dem Material kann es sich insbesondere um ein thermoplastisches Material, beispielsweise einen entsprechenden Kunststoff, handeln. Das Material kann beispielsweise in Form eines Filaments bereitgestellt werden und der Düse zugeführt werden. Es kann auch vorgesehen sein, dass das Material in Form eines Granulats der Düse zugeführt wird. Die Düse kann eine entsprechende Heizeinrichtung aufweisen, mittels welcher das Material erwärmt und somit geschmolzen werden kann. Innerhalb der Düse kann das Material gefördert werden, wobei das geschmolzene Material an einer Öffnung der Düse austritt. Somit kann mittels der Düse das geschmolzene Material ausgegeben werden. Dabei kann die Düse relativ zu dem Substrat bewegt werden.

Beispielsweise kann die Düse entlang zweier zueinander senkrechter Raumrichtungen bewegt werden. Es kann auch vorgesehen sein, dass die Düse zusätzlich entlang einer dritten Raumrichtung bewegt wird. Alternativ dazu kann das Substrat beziehungsweise ein höhenverstellbarer Tisch, auf dem das Substrat angeordnet ist, in der dritten Raumrichtung verstellt werden. Dabei wird die Düse entlang der Verfahrrichtung bewegt, welche zuvor für die Herstellung des Bauteils definiert wurde. Hierbei wird das geschmolzene Material als Strang beziehungsweise als Bahn ausgegeben. Ferner werden diese Bahnen in der Aufbaurichtung übereinander angeordnet. Dabei wird das geschmolzene Material üblicherweise auf das zuvor aufgetragene Material beziehungsweise auf eine zuvor aufgetragene Bahn aufgetragen, wobei das zuvor aufgetragene Material zumindest teilweise erstarrt beziehungsweise fest ist.

Gemäß einem wesentlichen Aspekt der vorliegenden Erfindung weist der Druckkopf zusätzlich die Schmelzeinrichtung auf. Dabei ist die Schmelzeinrichtung dazu ausgebildet, während der Bewegung des Druckkopfs fortlaufend jeweilige Bereiche des zuvor aufgetragenen Materials lokal zu erwärmen. Mittels der Schmelzeinrichtung kann das bereits aufgetragene Material beziehungsweise die bereits aufgetragene Bahn, welche zumindest zum Teil erstarrt ist, lokal erwärmt und somit lokal aufgeschmolzen werden. Die Schmelzeinrichtung unterscheidet sich somit von einer Heizeinrichtung der Düse, welche dazu dient, das Material innerhalb der Düse beziehungsweise des Druckkopfs zu schmelzen. Zudem ist insbesondere nicht vorgesehen, dass mittels der Schmelzeinrichtung das gesamte bereits aufgetragene Material beziehungsweise ein Bauraum, in dem sich das bereits aufgetragene Material befindet, vollständig erwärmt wird. Mittels der Schmelzeinrichtung sollen einzelne Bereiche des bereits erstarrten Materials lokal aufgeschmolzen werden. Im Betrieb der Druckvorrichtung wird der Druckkopf fortlaufend entlang der Verfahrrichtung bewegt. Während der Bewegung des Druckkopfes können mit der Schmelzeinrichtung fortlaufend beziehungsweise der Reihe nach die jeweiligen zuvor definierten Bereiche erwärmt beziehungsweise aufgeschmolzen werden. Dadurch kann beispielsweise die Verbindung des lokal aufgeschmolzenen Materials mit dem anschließend aus der Düse abgegebenen geschmolzenen Materials verbessert werden. Auf diese Weise können die mechanischen Eigenschaften des Bauteils verbessert werden.

In einer Ausführungsform ist die Schmelzeinrichtung dazu ausgebildet, als den jeweiligen Bereich des zuvor aufgetragenen Materials einen Vorwärmbereich, welcher sich in Verfahrrrichtung vor der Düse befindet, vor dem Auftragen des geschmolzenen Materials lokal zu erwärmen. Mit anderen Worten kann mittels der Schmelzeinrichtung eine Vorerwärmung des bereits aufgetragenen Materials vor dem Abgeben des geschmolzenen Materials aus der Düse auf genau diesem Bereich erfolgen. Es kann also vorgesehen sein, dass die Schmelzeinrichtung eine Vorwärmeinheit aufweist, mittels welcher der Bereich in Verfahrrichtung vor der Düse erwärmt werden kann. Zur Herstellung des Bauteils aus dem Material wird die Verfahrrichtung vorgegeben. Zudem ist insbesondere bekannt, zu welchem Zeitpunkt sich die Düse an welcher Position befinden wird. Es ist also bekannt, wenn sich die Düse an einer vorbestimmten Position befindet, zu welcher Position sie nachfolgend bewegt wird. Diese Position, zu der die Düse nachfolgend bewegt wird, stellt den Bereich dar, welcher mittels der Schmelzeinrichtung lokal erwärmt beziehungsweise aufgeschmolzen wird. Dabei kann der Vorwärmbereich eine Breite aufweise, welche zumindest der Breit des Strangs entspricht. Auf diesen lokal aufgeschmolzenen Bereich kann dann das geschmolzene Material aus der Düse abgegeben werden. Somit kann nach dem Aushärten eine verbesserte mechanische Verbindung zwischen diesen beiden Materialschichten beziehungsweise Bahnen erreicht werden. Hierdurch kann die mechanische Anisotropie im Bauteil verringert werden. Es kann erreicht werden, dass das Bauteil verbesserte mechanische Eigenschaften aufweist. Vor allem aber können die mechanischen Eigenschaften des Bauteils besser vorhergesehen werden. Dadurch kann eine genauere Dimensionierung des Bauteils ermöglicht werden, wodurch teure Überdimensionierungen vermieden werden können.

In einer weiteren Ausführungsform ist die Schmelzeinrichtung dazu ausgebildet, nach dem Auftragen des geschmolzenen Materials als den jeweiligen Bereich einen Grenzflächenbereich an einer Grenzfläche zwischen dem aufgetragenen geschmolzenen Material und dem zuvor aufgetragenen Material zu erwärmen. Alternativ oder zusätzlich zu der zuvor beschriebenen Vorerwärmung des bereits aufgetragenen Materials kann mittels der Schmelzeinrichtung auch die Grenzfläche zwischen dem zuvor aufgetragenen Material und dem gerade aufgetragenen geschmolzenen Material thermisch beeinflusst werden. Wie zuvor beschrieben, kann das bereits aufgetragene Material zumindest teilweise erstarrt beziehungsweise fest sein. Direkt nach dem Auftragen des geschmolzenen Materials aus der Düse ist dieses zumindest teilweise noch flüssig. In diesem Zustand kann die Schmelzeinrichtung dazu genutzt werden, das bereits aufgetragene Material beziehungsweise das erstarrte Material an der Grenzfläche zu dem gerade aufgetragenen geschmolzenen Material lokal zu erwärmen. Auf diese Weise kann das bereits aufgetragene Material an der Grenzfläche beziehungsweise in dem Grenzflächenbereich lokal aufgeschmolzen werden. Somit können diese beiden Materialbahnen ähnlich wie beim Durchstrahlschweißen miteinander verbunden werden. Durch die Kombination von dem Durchstrahlschweißen mit dem FLM-Verfahren kann ein verbesserter Gesamtprozess erreicht werden, durch den die mechanische Anisotropie weitestgehend eliminiert werden kann.

Hierbei ist insbesondere vorgesehen, dass die Schmelzeinrichtung dazu ausgebildet ist, zum Erwärmen des Grenzflächenbereichs eine Strahlung in das aufgetragene geschmolzene Material derart einzukoppeln, dass die Strahlung das geschmolzene Material durchdringt und an dem zuvor aufgetragenen Material absorbiert wird. Diese Strahlung kann bevorzugt mit einer Laserlichtquelle bereitgestellt werden. In das FLM-Verfahren kann also eine Laserlichtquelle integriert werden, dessen Strahlung das gerade aufgetragene geschmolzene Material optisch durchdringt und erst in die Grenzfläche zu der darunterliegenden Bahn beziehungsweise zu dem zuvor aufgetragenen erstarrten Material eindringt. Dadurch ergibt sich eine Wärmeeinflusszone, in der die Grenzschichtflächen durch die annähernd gleichen Temperaturen zusammengeschweißt werden. Hierdurch können thermische Spannungen abgebaut werden. Durch die lokale Wärmezufuhr wird zudem ein geringerer Verzug im Bauteil erreicht. Dabei wird die oberste Bahn beziehungsweise das geschmolzene aufgetragene Material durch den Laser zuerst optisch durchdrungen und anschließend daran erfolgt die Kopplung an der Grenzfläche.

Hierbei ist insbesondere vorgesehen, dass die oberste Bahn beziehungsweise das aufgetragene geschmolzene Material in einem speziellen Temperaturbereich für die Strahlung durchlässig ist und dass eine Grenzfläche vorhanden ist. Möglich ist dies beispielsweise, wenn die Strahlung das direkt extrudierte und damit noch heiße Material durchdringt und dann auf das zuvor aufgetragene und erkaltete Material trifft. Dabei kann das geschmolzene beziehungsweise flüssige Material amorphe Eigenschaften aufweisen und das zuvor aufgetragene Material beziehungsweise das erstarrte Material kann (teil-)kristalline Eigenschaften aufweisen.

Die zuvor beschriebene lokale Erwärmung der Grenzfläche unterscheidet sich deutlich von dem bekannten Laserdurchstrahlschweißen. Bei dem Laserdurchstrahlschweißen werden meistens sogar unterschiedliche Kunststoffe gefügt, die sich beide bereits im erkalteten Zustand befinden. Außerdem werden nicht die von der Temperatur abhängigen optischen Eigenschaften auf Basis der Phasenübergänge genutzt, sondern prinzipiell der unterschiedliche Kristallisationsgrad der zu fügenden Kunststoffe (amorph-teilkristallin). Dies führt dann zur Verwendung unterschiedlicher Kunststoffe, nämlich eines transmittierenden Kunststoffs und eines absorbierenden Kunststoffs. Im erfindungsgemäßen Verfahren wird ein und derselbe Werkstoff benutzt, der nur aufgrund seines Phasenzustands und damit in Abhängigkeit von der Temperatur transmittierend oder absorbierend ist.

In einer weiteren Ausführungsform umfasst die Schmelzeinrichtung eine Lichtquelle zum Aussenden von Laserlicht und/oder ein optisches Element zum Führen des Laserlichts. Die Schmelzeinrichtung kann zumindest eine Lichtquelle umfassen, mit der Laserlicht ausgesendet werden kann. Bei dieser Lichtquelle handelt es sich um einen Laser, eine Laserdiode oder dergleichen handeln. Insbesondere kann mit der Lichtquelle, welche auch als Strahlungsquelle bezeichnet werden kann, hochenergetische Strahlung ausgegeben werden. Die Lichtquelle kann beispielsweise direkt an der Düse angeordnet sein. Zudem weist die Schmelzeinrichtung ein optisches Element, beispielsweise eine Linse, auf, mittels welcher das Laserlicht geführt beziehungsweise gebündelt werden kann. Durch die Anordnung des optischen Elements zu der Lichtquelle und/oder durch die Ausgestaltung des optischen Elements kann beispielsweise der Fokus beziehungsweise ein Brennpunkt der Laserstrahlung vorgegeben werden. Es kann auch vorgesehen sein, dass die Lichtquelle beabstandet zu der Düse angeordnet ist. In diesem Fall kann das Laserlicht, das mit der Lichtquelle ausgesendet wird, beispielsweise über einen Lichtleiter zu einem Bereich der Düse geleitet werden. Somit kann das Laserlicht an einem Austrittsende des Lichtleiters ausgekoppelt werden. Auch in diesem Fall kann ein entsprechendes optisches Element verwendet werden. Durch die Laserstrahlung beziehungsweise das Laserlicht kann das aufgetragene Material lokal beziehungsweise bereichsweise erwärmt werden. Auf diese Weise kann der Drucckopf mit geringem Aufwand und geringen Kosten verbessert werden.

Es kann auch vorgesehen sein, dass die Schmelzeinrichtung dazu ausgebildet ist, einen entsprechenden Heißgasstrom zum lokalen Erwärmen des bereits aufgetragenen Materials ausgeben. Mit einer solchen Heißgasdüse kann ein entsprechendes Schutzgas beziehungsweise Inertgas, welches eine vorbestimmte Temperatur aufweist, ausgegeben werden. Alternativ dazu kann es vorgesehen sein, dass die Schmelzeinrichtung eine entsprechende Plasmadüse aufweist. Eine Heißgasdüse oder eine Plasmadüse können insbesondere zum lokalen Aufschmelzen des Vorwärmbereichs genutzt werden.

Gemäß der Erfindung weist der Druckkopf als das optische Element eine ringförmige Linse auf, welche die Düse umgibt. Hierbei ist es bevorzugt vorgesehen, dass dieser ringförmigen Optik beziehungsweise Linse die Strahlung beziehungsweise das Laserlicht über einen entsprechenden Lichtleiter zugeführt wird. Durch diese ringförmige Düse kann erreicht werden, dass alle Bereiche des Materials rund um die Düse aufgeschmolzen werden können. Durch das ringförmige optische Element kann der Fokus des Laserlichts so eingestellt werden, dass dieser in einem Bereich der Grenzfläche zwischen dem bereits aufgetragenen Material und dem gerade abgegebenen geschmolzenen Material liegt beziehungsweise dass dieser auf der Oberfläche des bereits aufgetragenen Materials liegt. Durch diese ringförmige Optik kann einerseits die Vorerwärmung des bereits aufgetragenen Materials und andererseits das Verschmelzen der beiden Materialschichten an der Grenzschicht ermöglicht werden. Dadurch, dass mittels dieser Optik der Bereich um den abgegebenen Extrusionsstrahl herum erwärmt wird, wird einerseits in Verfahrrichtung vor der Düse die Vorerwärmung realisiert und in Verfahrrichtung hinter der Düse wird die Erwärmung im Bereich der Grenzfläche realisiert. Zudem ergibt sich durch die Verwendung der ringförmigen Optik der Vorteil, dass die Steuerung vereinfacht wird. Hierbei sind die Vorerwärmung und Erwärmung der Grenzfläche nicht an die Bewegung der Düse anzupassen. Die zusätzliche Erwärmung der weiteren Bereiche, die durch die ringförmige Düse erwärmt werden, wirken sich dabei nicht negativ auf das Materialgefüge aus.

In einer weiteren Ausführungsform weist der Druckkopf eine Steuereinrichtung zum Einstellen einer Wärmeenergie, welche die Schmelzeinrichtung zum lokalen Erwärmen des Bereichs bereitstellt, auf. Mit anderen Worten kann mittels der Steuereinrichtung die thermische Leistung, die mit der Schmelzeinrichtung bereitgestellt wird, eingestellt werden. Wie bereits erläutert, kann die Schmelzeinrichtung eine Lichtquelle beziehungsweise Laserlichtquelle aufweisen. Zum Anpassen der Wärmeenergie beziehungsweise der thermischen Leistung kann die Intensität der Strahlung angepasst werden. Somit wird es beispielsweise ermöglicht, dass die mit der Schmelzeinrichtung bereitgestellte thermische Energie an das verwendete Material angepasst werden kann.

Gemäß einer weiteren Ausführungsform umfasst der Druckkopf eine Erfassungseinrichtung zum fortlaufenden Erfassen einer aktuellen Temperatur des jeweiligen Bereichs. Die Erfassungseinrichtung kann beispielsweise einen entsprechenden Sensor aufweisen, mit dem die aktuelle Temperatur des Bereichs, der mit der Schmelzeinrichtung erwärmt werden soll, erfasst werden kann. Beispielsweise kann die Erfassungseinrichtung einen entsprechenden Infrarot-sensor aufweisen. Somit können mittels der Erfassungseinrichtung die jeweiligen Temperaturen des gerade ausgegebenen geschmolzenen Materials und/oder des bereits aufgetragenen und zumindest teilweise erstarrten Materials bestimmt werden. Auf Grundlage dieser erfassten Temperaturen kann das Druckverfahren überwacht und gegebenenfalls angepasst werden.

Gemäß einer weiteren Ausführungsform ist die Steuereinrichtung dazu ausgebildet, die mit der Schmelzeinrichtung eingebrachte Wärmeenergie in Abhängigkeit von der mittels der Erfassungseinrichtung erfassten Temperatur zu regeln. Wenn beispielsweise eine Vorerwärmung mittels der Schmelzeinrichtung durchgeführt werden soll, kann die Temperatur des bereits aufgetragenen Materials erfasst werden und die Wärmeenergie, die mit der Schmelzeinrichtung zum Vorerwärmen dieses Bereichs ausgegeben wird, angepasst werden. Somit kann beispielsweise bestimmt werden, auf welche Solltemperatur das Material zum Vorerwärmen temperiert werden soll. Diese Soll-temperatur kann zuvor berechnet werden oder in entsprechenden Versuchen bestimmt werden. Es kann auch vorgesehen sein, dass die Temperatur des aktuell aufgetragenen und noch geschmolzenen Materials bestimmt wird um somit überprüfen zu können, dass Material für die Strahlung durchlässig ist. Somit kann eine Erwärmung der Grenzfläche beziehungsweise das Verschweißen der Materialien an der Grenzfläche effektiv gesteuert beziehungsweise geregelt werden.

Gemäß einer alternativen Ausführungsform kann es vorgesehen sein, dass die Schmelzeinrichtung relativ zu der Düse bewegbar ist. Insbesondere kann die Schmelzeinrichtung in Abhängigkeit von der vorbestimmten Verfahrrichtung beziehungsweise der geplanten Bewegungsbahn der Düse bewegt werden. Bei der Vorerwärmung können somit diejenigen Bereiche, auf denen das geschmolzene Material zukünftig aufgetragen wird, entsprechend erwärmt werden. Dies gilt in gleicher Weise für die Erwärmung der Grenzfläche zwischen dem bereits erstarrten Material und dem gerade abgegebenen geschmolzenen Material.

Eine erfindungsgemäße Druckvorrichtung zum dreidimensionalen Aufbringen eines Materials umfasst einen erfindungsgemäßen Druckkopf. Die Druckvorrichtung kann zudem einen entsprechenden Antrieb aufweisen, mittels welchem der Druckkopf bewegt werden kann. Es kann auch vorgesehen sein, dass die zuvor beschriebene Erfassungseinrichtung und/oder die zuvor beschriebene Steuereinrichtung Teil der Druckvorrichtung sind.

Ein erfindungsgemäßes Verfahren dient zum dreidimensionalen Aufbringen eines Materials mittels eines Druckkopfs. Hierbei wird mittels einer beheizten Düse das Material geschmolzen und das geschmolzene Material wird ausgegeben. Zudem wird der Druckkopf entlang einer vorbestimmten Verfahrrichtung bewegt. Hierbei wird das geschmolzene Material als Strang auf ein zuvor aufgetragenes Material, welches zumindest teilweise erstarrt ist, und/oder ein Substrat aufgetragen. Hierbei ist vorgesehen, dass während der Bewegung des Druckkopfs fortlaufend jeweilige Bereiche des zuvor aufgetragenen Materials mittels einer Schmelzeinrichtung des Druckkopfs lokal erwärmt werden.

Wie zuvor im Zusammenhang mit dem Druckkopf beschrieben wurde, kann eine Vorerwärmung vor dem Aufbringen des geschmolzenen Materials und/oder eine Erwärmung der Grenzfläche zwischen dem aktuell aufgetragenen geschmolzenen Material und dem bereits erstarrten, darunter liegenden Material durchgeführt werden. Es ist vorgesehen, dass die Schmelzeinrichtung eine Laserlichtquelle aufweist, mittels welcher das aufgetragene Material lokal erwärmt beziehungsweise aufgeschmolzen werden kann. Um insbesondere die Erwärmung der Grenzfläche zu realisieren, kann als Material ein Kunststoff verwendet werden, welcher im geschmolzenen Zustand amorphe Eigenschaften aufweist und im erstarrten Zustand (teil-)kristalline Eigenschaften aufweist. Insbesondere kann es sich um einen thermoplastischen Kunststoff handeln. Zwischen dem erstarrten Material und dem darauf aufgetragenen geschmolzenen Material ergibt sich eine natürliche Grenzfläche. Diese natürliche Grenzfläche kann durch die Prozesstemperatur und Prozessführung weiter ausgeprägt werden. Alternativ oder zusätzlich können entsprechende Additive, die die Absorption der Laserstrahlung verbessern, nach dem Auftragen des geschmolzenen Materials oder nach jeder Schicht aufgetragen werden, sodass sich zwischen den einzelnen Schichten beziehungsweise Bahnen eine lasertiefe Schicht bildet. Die Additive können beispielsweise flüssiger, pulverförmiger, aerosolartiger, folienartiger oder gasförmiger Art sein. Zudem kann der Fokus des Laserstrahls so angepasst werden, dass der Fokus beziehungsweise ein Brennpunkt im Bereich der Grenzfläche liegt. Somit kann garantiert werden, dass der Energieantrag erst in der Grenzfläche erfolgt.

Die zuvor im Zusammenhang mit dem erfindungsgemäßen Druckkopf vorgestellten Ausführungsformen und deren Vorteile gelten entsprechend für die erfindungsgemäße Druckvorrichtung sowie für das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: eine schematische Darstellung einer Druckvorrichtung zum dreidimensionalen Aufbringen eines Materials gemäß dem Stand der Technik;
- FIG 2: eine schematische Darstellung einer Druckvorrichtung mit einem Druckkopf gemäß einer ersten Ausführungsform;
- FIG 3: eine schematische Darstellung einer Druckvorrichtung mit einem Druckkopf gemäß einer zweiten Ausführungsform; und
- FIG 4: eine schematische Darstellung einer Druckvorrichtung mit einem Druckkopf gemäß einer dritten Ausführungsform;

In den Figuren werden gleiche oder funktionsgleiche Elemente mit den gleichen Bezugszeichen versehen.

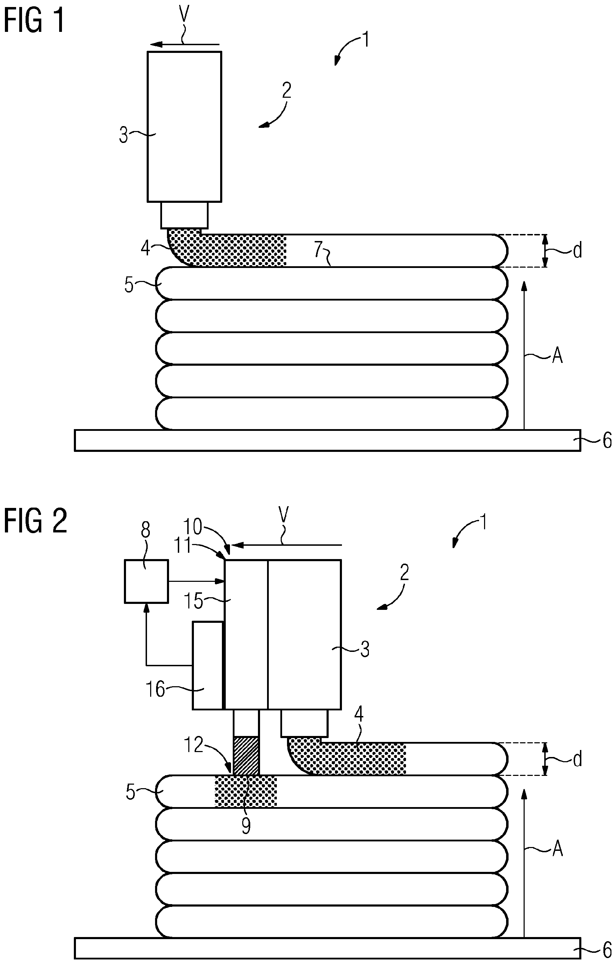

FIG 1 zeigt eine schematische Darstellung eine Druckvorrichtung 1 gemäß dem Stand der Technik. Mit dieser Druckvorrichtung 1 kann das sogenannte FLM-Verfahren durchgeführt werden. Die Druckvorrichtung 1 umfasst einen Druckkopf 2, welcher eine beheizte Düse 3 aufweist. Dieser Düse 3 wird ein Material, beispielsweise in Form eines Filaments, zugeführt. Mittels der Düse 3 kann dann das Material erwärmt und geschmolzen werden. Auf diese Weise kann mittels der Düse 3 ein geschmolzenes Material 4 ausgeben werden. Dabei wird das geschmolzene Material 4 als Strang beziehungsweise als Bahn ausgegeben.

Das geschmolzene Material 4 wird dabei auf ein zuvor aufgetragenes Material 5 aufgetragen, welches zumindest teilweise erstarrt ist. Zu Beginn des Verfahrens wird das Material auf ein Substrat 6 aufgetragen. Danach werden mehrere Schichten beziehungsweise Bahnen übereinander entlang einer Aufbaurichtung A aufgetragen. Die jeweiligen Bahnen weisen eine Dicke d auf, wobei die Dicke d der jeweiligen Bahnen gleich ist. Der Druckkopf 2 wird mittels eines hier nicht dargestellten Antriebs entlang einer Verfahrrichtung V bewegt.

Das zuvor aufgetragene Material 5 ist zumindest teilweise erstarrt, wenn das geschmolzene Material 4 auf dieses aufgetragen wird. Das zuvor aufgetragene Material 5 weist eine deutlich geringere Temperatur auf als das geschmolzene Material 4. Aufgrund dieses Temperaturunterschieds können mechanische Spannungen zwischen diesen beiden Bahnen auftreten. Dies kann zur Folge haben, dass an einer Grenzschicht 7 zwischen dem geschmolzenen Material 4 und dem zuvor aufgetragenen Material 5 beziehungsweise zwischen diesen in der Aufbaurichtung A übereinanderliegenden Bahnen keine ausreichende Verbindung zustande kommt.

FIG 2 zeigt in einer schematischen Darstellung eine Druckvorrichtung 1 mit einem Druckkopf 2 gemäß einer ersten Ausführungsform, die nicht beansprucht wird, aber für das Verständnis der Erfindung nützlich ist. Hier weist der Druckkopf 2 ebenfalls eine beheizte Düse 3 auf. Zudem umfasst der Druckkopf 2 eine Schmelzeinrichtung 10. Die Schmelzeinrichtung 10 dient dazu, das zuvor aufgetragene Material 5 lokal beziehungsweise bereichsweise zu erwärmen. In dem vorliegenden Beispiel umfasst die Schmelzeinrichtung 10 ein Vorwärmeinheit 11. Mittels der Vorwärmeinheit 11 kann ein Vorwärmbereich 12 des zuvor aufgetragenen Materials 5 erwärmt werden, wobei sich der Vorwärmbereich 12 in der Verfahrrichtung V vor der Düse 3 befindet. In diesem Vorwärmbereich 12 wird also das geschmolzene Material 4 mittels der Düse 3 als nächstes aufgetragen werden. Durch die lokale Erwärmung des Vorwärmbereichs 12 kann das zuvor aufgetragene Material 5, welches erstarrt ist, lokal aufgeschmolzen werden. Dadurch kann die Verbindung zwischen dem zuvor aufgetragenen Material 5 und dem darauf aufgebrachten geschmolzenen Material 4 verbessert werden.

Die Schmelzeinrichtung 10 beziehungsweise die Vorwärmeinheit 11 umfasst eine Lichtquelle 15, mittels welcher Laserstrahlung ausgesendet werden kann. Dabei kann mittels der Lichtquelle 15 eine Oberfläche 9 des zuvor aufgetragenen Materials 5 erwärmt werden. Hierbei kann ein Fokus der Lichtquelle 15 so eingestellt sein, dass dieser auf der Oberfläche 9 des zuvor aufgetragenen Materials 5 liegt. Der Druckkopf 2 umfasst ferner eine Steuereinrichtung 8, mittels welcher ein Betrieb der Lichtquelle 15 angepasst werden kann. Beispielsweise kann eine Strahlungsleistung der Laserstrahlung, die mit der Lichtquelle 15 abgegeben wird, eingestellt werden. Darüber hinaus umfasst der Druckkopf 2 eine Erfassungseinrichtung 16, mittels welcher eine aktuelle Temperatur des zuvor aufgetragenen Materials 5 bestimmt werden kann. In Abhängigkeit von der aktuellen Temperatur kann die Lichtquelle 15 mittels der Steuereinrichtung 8 angesteuert werden. Auf diese Weise kann die Strahlungsleistung der Laserstrahlung an die aktuelle Temperatur angepasst werden und damit bestimmt werden, wie das zuvor aufgetragene Material 5 erwärmt wird. Somit kann erreicht werden, dass der Vorwärmbereich 12 auf eine vorbestimmte Soll-Temperatur eingestellt wird. Insbesondere kann auf diese Weise ein Regelkreis bereitgestellt werden, um die Temperatur des Vorwärmbereichs 12 auf die Soll-Temperatur zu regeln. Die Steuereinrichtung 8 und die Erfassungseinrichtung 16 sind vorliegend Teil des Druckkopfs 2 und an der Düse 3 angeordnet. Es kann auch vorgesehen sein, dass die Steuereinrichtung 8 und/oder die Erfassungseinrichtung 16 beabstandet von der Düse 3 angeordnet sind und/oder Teil der Druckvorrichtung 1 sind.

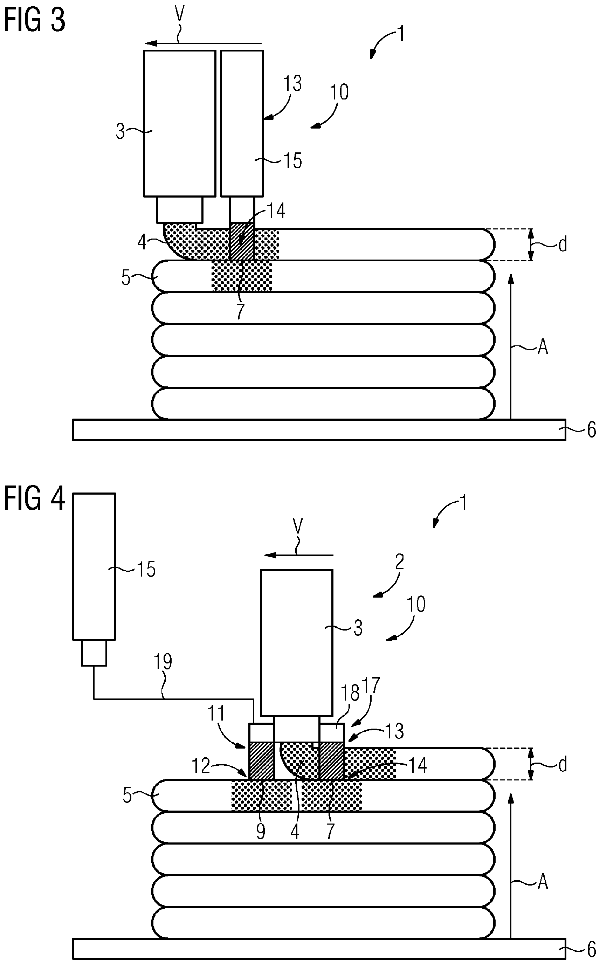

FIG 3 zeigt in einer schematischen Darstellung eine Druckvorrichtung 1 mit einem Druckkopf 2 gemäß einer zweiten Ausführungsform, die nicht beansprucht wird, aber für das Verständnis der Erfindung nützlich ist.

Auch hier weist der Druckkopf 2 die beheizte Düse 3 auf. Ferner weist der Druckkopf 2 eine Schmelzeinrichtung 10 auf, welche bei diesem Beispiel eine Durchstrahleinheit 13 aufweist. Mittels der Durchstrahleinheit 13 kann ein Grenzflächenbereich 14 erwärmt werden. Dieser Grenzflächenbereich 14 ist der Grenzfläche 7 zwischen dem zuvor aufgetragenen Material 5 und aktuell aufgetragenen geschmolzenen Material 4 zugeordnet. Ferner ist der Grenzflächenbereich 14 in der Verfahrrichtung V hinter der Düse 3 angeordnet. Auch die Durchstrahleinheit 13 umfasst eine Lichtquelle 15, mittels welcher Laserstrahlung ausgesendet werden kann. Hierbei ist der Fokus auf die Grenzfläche 7 eingestellt. Mittels der Durchstrahleinheit 13 kann der Grenzflächenbereich 14 unmittelbar nach dem Aufbringen des geschmolzenen Materials 4 erwärmt werden.

Bei dem Material kann es sich um einen thermoplastischen Kunststoff handeln. Dieses Material kann in dem geschmolzenen Zustand für die Strahlung der Lichtquelle durchlässig sein. Im geschmolzenen Zustand kann das Material amorphe Eigenschaften aufweisen. Das zuvor aufgetragene Material 5, welches zumindest teilweise erstarrt ist, kann teilkristalline oder kristalline Eigenschaften aufweisen und die Strahlung absorbieren. Damit kann erreicht werden, dass der Grenzflächenbereich 14 erwärmt wird. In dem Vorwärmbereich 12 trifft die Strahlung direkt auf die Oberfläche 9 des zuvor aufgetragenen Materials 5. Somit kann die Verbindung dieser beiden Schichten verbessert werden und quasi ein Verschweißen der Schichten erreicht werden. Auch dieser Druckkopf 2 kann die Steuereinrichtung 8 und/oder die Erfassungseinrichtung 16 aufweisen.

FIG 4 zeigt in einer schematischen Darstellung eine Druckvorrichtung 1 mit einem Druckkopf 2 gemäß der Erfindung. Dieser Druckkopf 2 weist ebenfalls die beheizte Düse 3 auf. Außerdem weist der Druckkopf 2 die Schmelzeinrichtung 10 auf. In diesem Fall umfasst die Schmelzeinrichtung 10 ein optisches Element 17 in Form einer ringförmigen Linse 18 auf, wobei die ringförmige Linse 18 die Düse 3 umgibt. Ferner umfasst die Schmelzeinrichtung 10 die Lichtquelle 15, welche beabstandet zu der Düse 3 angeordnet ist.

Dabei wird das Licht beziehungsweise die Strahlung der Lichtquelle 15 über einen Lichtleiter 19 zu dem optischen Element 17 geleitet. Durch das optische Element 17 beziehungsweise die ringförmige Linse 18 wird sowohl die Vorwärmeinheit 11 als auch die Durchstrahleinheit 13 realisiert. Durch die ringförmige Linse 18 wird der gesamte Bereich um die Düse 3 herum erwärmt. In Verfahrrichtung V vor der Düse 3 wird dabei der Vorwärmbereich 12 erwärmt und in Verfahrrichtung V hinter der Düse 3 wird der Grenzflächenbereich 14 erwärmt.

Der Fokus des optischen Elements 17 beziehungsweise der ringförmigen Linse 18 ist dabei so gewählt, dass dieser auf der Grenzfläche 7 liegt. Daher liegt der Fokus auch auf der Oberfläche 9 des zuvor aufgetragenen Materials 5, da die Oberfläche 9 bezogen auf die Aufbaurichtung A die gleiche Höhe aufweist wie die Grenzfläche 7. Mittels des optischen Elements 17 kann unabhängig von der Verfahrrichtung V sowohl der Vorwärmbereich 12 als auch der Grenzflächenbereich 14 erwärmt beziehungsweise geschmolzen werden. Auch dieser Druckkopf 2 kann die Steuereinrichtung 8 und/oder die Erfassungseinrichtung 16 aufweisen.

## Patentansprüche

1. Druckkopf (2) für eine Druckvorrichtung (1) zum dreidimensionalen Aufbringen eines Materials, umfassend
- eine beheizte Düse (3) zum Schmelzen des Materials und zum Ausgeben des geschmolzenen Materials (4),
- wobei der Druckkopf (2) dazu ausgebildet ist, bei einer Bewegung des Druckkopfs (2) entlang einer vorbestimmten Verfahrrichtung (V) das geschmolzene Material (4) als Strang auf ein zuvor aufgetragenes Material (5), welches zumindest teilweise erstarrt ist, und/oder ein Substrat (6) aufzutragen,
wobei
- der Druckkopf (2) eine Schmelzeinrichtung (10) aufweist,
- wobei die Schmelzeinrichtung (10) dazu ausgebildet ist, während der Bewegung des Druckkopfs (2) fortlaufend jeweilige Bereiche (12, 14) des zuvor aufgetragenen Materials (5) lokal zu erwärmen,
wobei die Schmelzeinrichtung (10) ein optisches Element (17) zum Führen von Laserlicht aufweist,
**dadurch gekennzeichnet, dass** der Druckkopf (2) als das optische Element (17) eine ringförmige Linse (18) aufweist, welche die Düse (3) umgibt.

2. Druckkopf (2) nach Anspruch 1, **dadurch gekennzeichnet, dass** die Schmelzeinrichtung (10) dazu ausgebildet ist, als den jeweiligen Bereich (12, 14) des zuvor aufgetragenen Materials (5) einen Vorwärmbereich (12), welcher sich in der Verfahrrichtung (V) vor der Düse (3) befindet, vor dem Auftragen des geschmolzenen Materials (4) lokal zu erwärmen.

3. Druckkopf (2) nach Anspruch 1 oder 2, **dadurch gekennzeichnet, dass** die Schmelzeinrichtung (10) dazu ausgebildet ist, nach dem Auftragen des geschmolzenen Materials (4) als den jeweiligen Bereich (12, 14) einen Grenzflächenbereich (14) an einer Grenzfläche (7) zwischen dem aufgetragenen geschmolzenen Material (4) und dem zuvor aufgetragenen Material (5) zu erwärmen.

4. Druckkopf (2) nach Anspruch 3, **dadurch gekennzeichnet, dass** die Schmelzeinrichtung (10) dazu ausgebildet ist, zum Erwärmen des Grenzflächenbereichs (14) eine Strahlung in das aufgetragene geschmolzenen Material (4) derart einzukoppeln, dass die Strahlung das geschmolzene Material (4) durchdringt und an dem zuvor aufgetragenen Material (5) absorbiert wird.

5. Druckkopf (2) nach einem der vorhergehenden Ansprüche, **dadurch gekennzeichnet, dass** die Schmelzeinrichtung (10) eine Lichtquelle (15) zum Aussenden von Laserlicht und/oder ein optisches Element (17) zum Führen des Laserlichts aufweist.

6. Druckkopf (2) nach einem der vorhergehenden Ansprüche, **dadurch gekennzeichnet, dass** der Druckkopf (2) eine Steuereinrichtung (8) zum Einstellen einer Wärmeenergie, welche die Schmelzeinrichtung (10) zum lokalen Erwärmen des Bereichs (12, 14) bereitstellt, aufweist.

7. Druckkopf (2) nach einem der vorhergehenden Ansprüche, **dadurch gekennzeichnet, dass** der Druckkopf (2) eine Erfassungseinrichtung (16) zum fortlaufenden Erfassen einer aktuellen Temperatur des jeweiligen Bereichs (12, 14) aufweist.

8. Druckkopf (2) nach Anspruch 6 und 7, **dadurch gekennzeichnet, dass** die Steuereinrichtung (8) dazu ausgebildet ist, die mit der Schmelzeinrichtung (10) eingebrachte Wärmeenergie in Abhängigkeit von der mittels der Erfassungseinrichtung (16) erfassten Temperatur zu regeln.

9. Druckvorrichtung (1) zum dreidimensionalen Aufbringen eines Materials umfassend einen Druckkopf (2) nach einem der vorhergehenden Ansprüche.

10. Verfahren zum dreidimensionalen Aufbringen eines Materials mittels eines Druckkopfs (2), bei welchem mittels einer beheizten Düse (3) das Material geschmolzen wird und das geschmolzene Material (4) ausgegeben wird, der Druckkopf (2) entlang einer vorbestimmten Verfahrrichtung (V) bewegt wird und hierbei das geschmolzene Material (4) als Strang auf ein zuvor aufgetragenes Material (5), welches zumindest teilweise erstarrt ist, und/oder ein Substrat (6) aufgetragen wird, wobei
während der Bewegung des Druckkopfs (2) fortlaufend jeweilige Bereiche (12, 14) des zuvor aufgetragenen Materials (5) mittels einer Schmelzeinrichtung (10) des Druckkopfs (2) lokal erwärmt werden,
wobei die Schmelzeinrichtung (10) ein optisches Element (17) zum Führen von Laserlicht aufweist,
**dadurch gekennzeichnet, dass** der Druckkopf (2) als das optische Element (17) eine ringförmige Linse (18) aufweist, welche die Düse (3) umgibt.

## Claims

1. Print head (2) for a printing device (1) for the three-dimensional application of a material, comprising
- a heated nozzle (3) for melting the material and for dispensing the melted material (4),
- wherein the print head (2) is designed to apply, as said print head (2) moves along a predefined direction of travel (V), the melted material (4) in the form of a strand on a previously applied material (5), which has at least partly solidified, and/or on a substrate (6),
wherein
- the print head (2) has a melting facility (10),
- wherein the melting facility (10) is designed to continuously apply heat locally to respective regions (12, 14) of the previously applied material (5), as the print head (2) is moving,
wherein the melting facility (10) has an optical element (17) for guiding laser light,
**characterised in that** the print head (2) has an annular lens (18), which surrounds the nozzle (3), as the optical element (17) .

2. Print head (2) according to claim 1, **characterised in that** as the respective region (12, 14) of the previously applied material (5), the melting facility (10) is designed to apply heat locally to a pre-heat region (12) which is situated ahead of the nozzle (3) in the direction of travel (V), before the application of the melted material (4).

3. Print head (2) according to claim 1 or 2, **characterised in that** after the application of the melted material (4), as the respective region (12, 14), the melting facility (10) is designed to apply heat to a boundary surface region (14) at a boundary surface (7) between the applied melted material (4) and the previously applied material (5).

4. Print head (2) according to claim 3, **characterised in that** the melting facility (10) is designed to inject a radiation into the applied melted material (4) in order to heat the boundary surface region (14), such that the radiation penetrates the melted material (4) and is absorbed at the previously applied material (5).

5. Print head (2) according to one of the preceding claims, **characterised in that** the melting facility (10) has a light source (15) for emitting laser light and/or an optical element (17) for guiding said laser light.

6. Print head (2) according to one of the preceding claims, **characterised in that** the print head (2) has a control facility (8) for adjusting a heat energy that is provided by the melting facility (10) for the purpose of applying heat locally to the region (12, 14).

7. Print head (2) according to one of the preceding claims, **characterised in that** the print head (2) has a detection facility (16) for continuously detecting a current temperature of the respective region (12, 14).

8. Print head (2) according to claim 6 and 7, **characterised in that** the control facility (8) is designed to provide closed-loop control of the heat energy that is introduced by the melting facility (10) as a function of the temperature detected by the detection facility (16).

9. Printing device (1) for the three-dimensional application of a material, comprising a print head (2) according to one of the preceding claims.

10. Method for the three-dimensional application of a material by means of a print head (2), in which method a heated nozzle (3) is used to melt the material and to dispense the melted material (4), the print head (2) is moved along a predefined direction of travel (V) and, as part of this activity, the melted material (4) is applied in the form of a strand on a previously applied material (5), which has at least partly solidified, and/or on a substrate (6),
wherein
during the movement of the print head (2), respective regions (12, 14) of the previously applied material (5) are continuously heated locally by means of a melting facility (10) of the print head (2),
wherein the melting facility (10) has an optical element (17) for guiding laser light,
**characterised in that** the print head (2) has an annular lens (18), which surrounds the nozzle (3), as the optical element (17) .

## Revendications

1. Tête (2) d'impression d'une installation (1) d'impression pour le dépôt tridimensionnel d'un matériau, comprenant
- une buse (3) chauffée pour la fusion du matériau et la distribution du matériau (4) fondu,
- dans laquelle la tête (2) d'impression est constituée pour, lors d'un déplacement de la tête (2) d'impression suivant une direction (V) de déplacement définie à l'avance, déposer le matériau (4) fondu, sous la forme d'un cordon, sur un matériau (5) déposé auparavant, qui est solidifié au moins en partie, et/ou sur un substrat (6),
dans laquelle
- la tête (2) d'impression a un dispositif (10) de fusion,
- dans laquelle le dispositif (10) de fusion est constitué pour, pendant le déplacement de la tête (2) d'impression, chauffer localement, d'une manière continue, des parties (12, 14) respectives du matériau (5) déposé auparavant.
dans laquelle le dispositif (10) de fusion a un élément (17) optique pour guider de la lumière laser,
**caractérisée en ce que** la tête (2) d'impression a, comme élément (17) optique, une lentille (18) annulaire, qui entoure la buse (3) .

2. Tête (2) d'impression suivant la revendication 1, **caractérisée en ce que** le dispositif (10) de fusion est constitué pour chauffer localement, avant le dépôt du matériau (4) fondu, comme partie (12, 14) respective du matériau (5) déposé auparavant, une partie (12) de préchauffage, qui se trouve, dans la sens (V) de déplacement, avant la buse (3).

3. Tête (2) d'impression suivant la revendication 1 ou 2, **caractérisée en ce que** le dispositif (10) de fusion est constitué pour réchauffer, après le dépôt du matériau (4) fondu, comme partie (12, 14) respective, une partie (14) d'une surface (7) limite entre le matériau (4) fondu déposé et le matériau (5) déposé auparavant.

4. Tête (2) d'impression suivant la revendication 3, **caractérisée en ce que** le dispositif (10) de fusion est constitué pour, afin de chauffer la partie (14) de la surface limite, injecter un rayonnement dans le matériau (4) fondu déposé, de manière à ce que le rayonnement traverse le matériau (4) fondu et soit absorbé sur le matériau (5) déposé auparavant.

5. Tête (2) d'impression suivant l'une des revendications précédentes, **caractérisée en ce que** le dispositif (10) de fusion a une source (15) lumineuse d'émission de lumière laser et/ou un élément (17) optique de guidage de la lumière laser.

6. Tête (2) d'impression suivant l'une des revendications précédentes, **caractérisée en ce que** la tête (2) d'impression a un dispositif (8) de commande pour le réglage d'une énergie calorifique, que le dispositif (10) de fusion met à disposition pour le chauffage local de la partie (12, 14).

7. Tête (2) d'impression suivant l'une des revendications précédentes, **caractérisée en ce que** la tête (2) d'impression a un dispositif (16) de détection pour la détection en continue d'une température en cours de la partie (12, 14) respective.

8. Tête (2) d'impression suivant la revendication 6 et 7, **caractérisée en ce que** le dispositif (8) de commande est constitué pour régler l'énergie calorifique introduite par le dispositif (10) de fusion en fonction de la température détectée au moyen du dispositif (16) de détection.

9. Installation (1) d'impression pour le dépôt en trois dimensions d'un matériau comprenant une tête (2) d'impression suivant l'une des revendications précédentes.

10. Procédé de dépôt en trois dimensions d'un matériau au moyen d'une tête (2) d'impression, dans lequel au moyen d'une buse (3) chauffée, on fait fondre le matériau et on distribue le matériau (4) fondu, on déplace la tête (2) d'impression suivant un sens donné de déplacement (V) défini à l'avance, et on dépose ainsi le matériau (4) fondu, sous la forme d'un cordon, sur un matériau (5) déposé auparavant, qui est solidifié au moins en partie, et/ou sur un substrat (6),
dans lequel
pendant le déplacement de la tête (2) d'impression, on chauffe, localement en continu au moyen d'un dispositif (10) de fusion de la tête (2) d'impression, des parties (12, 14) respectives du matériau (5) déposé auparavant,
dans lequel le dispositif (10) de fusion a un élément (17) optique pour le guidage de la lumière laser,
**caractérisé en ce que en ce que** la tête (2) d'impression a, comme élément (17) optique, une lentille (18) annulaire, qui entoure la buse (3).
